(19) Europäisches Patentamt
European Patent Office
Office européen des brevets

(11) EP 2 730 607 B1

(12) **EUROPEAN PATENT SPECIFICATION**

(45) Date of publication and mention
of the grant of the patent:
**14.10.2015 Bulletin 2015/42**

(21) Application number: **12807212.1**

(22) Date of filing: **04.07.2012**

(51) Int Cl.:
*C08J 9/00* (2006.01)          *B01D 39/16* (2006.01)
*B01D 46/52* (2006.01)       *B01D 46/54* (2006.01)
*B01D 71/36* (2006.01)       *C08J 9/26* (2006.01)
*B29C 55/00* (2006.01)       *C08J 5/18* (2006.01)
*C08K 5/00* (2006.01)        *B01D 67/00* (2006.01)
*B01D 69/10* (2006.01)       *B32B 5/02* (2006.01)
*B32B 5/30* (2006.01)        *B32B 27/12* (2006.01)
*B32B 27/32* (2006.01)       *B29C 55/02* (2006.01)

(86) International application number:
**PCT/JP2012/004347**

(87) International publication number:
**WO 2013/005431 (10.01.2013 Gazette 2013/02)**

(54) **METHOD FOR PRODUCING POROUS POLYTETRAFLUOROETHYLENE MEMBRANE**

VERFAHREN ZUR HERSTELLUNG EINER PORÖSEN POLYTETRAFLUORETHYLENMEMBRAN

PROCÉDÉ DE FABRICATION D'UNE MEMBRANE POREUSE DE POLYTÉTRAFLUOROÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2011   JP 2011149001
08.05.2012   JP 2012107018**

(43) Date of publication of application:
**14.05.2014 Bulletin 2014/20**

(73) Proprietor: **Nitto Denko Corporation
Osaka 567-8680 (JP)**

(72) Inventors:
• **ISHII, Kyoko
Ibaraki-shi
Osaka 567-8680 (JP)**

• **AIZAWA, Seiji
Ibaraki-shi
Osaka 567-8680 (JP)**

(74) Representative: **Hart-Davis, Jason et al
Cabinet Beau de Loménie
158, rue de l'Université
75340 Paris Cedex 07 (FR)**

(56) References cited:
**EP-A1- 0 433 787       EP-A1- 0 808 648
EP-A1- 1 734 070       JP-A- 2003 503 991
JP-A- 2007 242 444     JP-A- 2009 024 040
JP-A- 2009 024 040     JP-A- 2009 179 656
JP-A- 2009 179 656     JP-A- 2010 110 914**

**Description**

TECHNICAL FIELD

The present invention relates to a method for producing a porous polytetrafluoroethylene (hereinafter referred to as "PTFE") membrane, and in particular, to a method for producing a porous PTFE membrane having the properties suitable for use as a waterproof air-permeable member and as a collection layer for an air filter medium.

BACKGROUND ART

Porous PTFE membranes are generally produced as follows. A mixture obtained by mixing a PTFE fine powder and a liquid lubricant serving as an extrusion aid is extrusion-molded, and the resulting molded body is rolled to form a PTFE sheet. The liquid lubricant is removed from the PTFE sheet, and then the resulting PTFE sheet, from which the liquid lubricant has been removed, is stretched to make the sheet porous. Thus, a porous PTFE membrane is produced. The porous PTFE membrane thus obtained has a porous structure of nodes and fibrils, as is well known.

Housings of some electronic devices and lighting devices are provided with openings. In such an electronic device, acoustic energy propagates, through the opening, between an acoustic transducer such as a microphone or a speaker mounted in the housing and the outside of the housing. In the case of the housing of a lighting device, air expanded by heat produced from a light emitter is discharged to the outside of the housing through the opening. Since small-sized electronic devices such as mobile phones and vehicle lighting devices such as automotive headlights require high waterproofness in some cases, water intrusion through the openings needs to be prevented. Therefore, waterproof air-permeable members having both water resistance and air permeability (sound transmittance) are often disposed in the openings of the housings of these devices.

A waterproof air-permeable member used in an electronic device is also referred to as a waterproof sound-transmitting member, but hereinafter in this description, the term "waterproof air-permeable member" is used as a term representing the concept including a waterproof sound-transmitting member.

The performance of a porous PTFE membrane for use as a waterproof air-permeable member is evaluated using the water resistance and air permeability as indicators, but these two properties are in a so-called trade-off relationship. Therefore, there have been proposals to use a multilayer porous PTFE membrane so as to provide a waterproof air-permeable member having both excellent water resistance and excellent air permeability.

Patent Literature 1 proposes that a porous PTFE membrane be produced by applying a pressure to a laminated body of a first unsintered sheet made of PTFE having a standard specific gravity of 2.16 or more and a second unsintered sheet made of PTFE having a standard specific gravity of less than 2.16 to pressure-bond them, and further stretching the pressure-bonded article. Porous PTFE membranes having excellent air permeability are more likely to be obtained from PTFE having a high standard specific gravity, in other words, having a low molecular weight. Porous PTFE membranes having excellent water resistance are more likely to be obtained from PTFE having a low standard specific gravity, in other words, having a high molecular weight. In view of this tendency, in Patent Literature 1, the above-mentioned two types of PTFE sheets are used in combination to achieve a good balance between water resistance and air permeability. Patent Literature 1 reports that porous PTFE membranes each having a water entry pressure of 0.31 to 0.33 MPa and an air permeability of 3 to 5 sec/100 ml in terms of Gurley number (equivalent to about 0.31 to 0.52 cm$^3$/sec/cm$^2$ in terms of Frazier number) were obtained in Examples.

When the porous PTFE membrane is used as a collection layer of an air filter medium, it is usually bonded to an air-permeable support member such as a nonwoven fabric to provide the required strength to the membrane. The porous PTFE membrane and the air-permeable support member are bonded together by heat lamination, lamination using an adhesive (adhesive lamination), or the like.

Pressure loss and collection efficiency are important properties of an air filter medium, and these two properties are also in a trade-off relationship. A PF value is often used as a measure for evaluating whether the pressure loss and the collection efficiency are well balanced or not. The PF value is calculated by the following Equation (B-1). The higher the PF value of an air filter medium, the higher the performance thereof. In Equation (B-1), the permeability PT and the collection efficiency CE have a relationship expressed by the following Equation (B-2). PL is the pressure loss.

$$\text{PF value} = \{-\log(\text{PT (\%)}/100)/(\text{PL (mmH}_2\text{O})\} \times 100 \qquad \text{(B-1)}$$

$$\text{PT (\%)} = 100 - \text{CE (\%)} \qquad \text{(B-2)}$$

An air filter medium requires a porous PTFE membrane having a high PF value to achieve a good balance between pressure loss and collection efficiency. In order to produce a porous PTFE membrane having a high PF value, various improvements have been proposed for each step of porous PTFE membrane production methods.

For example, Patent Literature 2 proposes that in the step of stretching a PTFE sheet to make the sheet porous, after stretching in the longitudinal direction (MD direction), the PTFE sheet be stretched in the transverse direction (TD direction) at a high stretching speed (paragraph 0023). Patent Literature 3 proposes that in the step of mixing a PTFE fine powder and a liquid lubricant, a large amount of liquid lubricant be added (paragraphs 0053 to 0055).

EP0808648 discloses a process for producing porous PTFE membranes comprising the steps of extrusion, rolling, stretching and removing the lubricant

CITATION LIST

Patent Literature

    Patent Literature 1: JP 2010-110914 A
    Patent Literature 2: JP 2001-170461 A
    Patent Literature 3: JP 2002-301343 A

SUMMARY OF INVENTION

Technical Problem

There is a limit in improving the porous PTFE membrane as a waterproof air-permeable member by laminating two PTFE sheets (see Patent Literature 1). There is also a limit in increasing the PF value of the porous PTFE membrane for use in an air filter medium by increasing the stretching speed in the TD direction (see Patent Literature 2). By adding a large amount of liquid lubricant (see Patent Literature 3), the diameter of fibrils is reduced and the distance between fibrils is increased, and thus the PF value can be increased further. However, this improvement causes a decrease in the collection performance per unit thickness of the porous PTFE membrane in exchange for an increase in the PF value. The thickness of the porous PTFE membrane need be increased to compensate for the decrease in the collection performance. However, when the thickness of the porous PTFE membrane is increased to increase the PF value, the mass per unit area of the membrane increases significantly. The increase in the mass per unit area leads to an increase in the amount of PTFE required to produce a porous membrane, in other words, to an increase in the cost of the raw material.

Under these circumstances, it is an object of the present invention to provide a novel porous PTFE membrane production method suitable for improving the properties of porous PTFE membranes used as waterproof air-permeable members, collection layers for air filter media, etc.

Solution to Problem

The present invention provides a method for producing a porous PTFE membrane, including: a step A of extruding a mixture containing a PTFE fine powder having a standard specific gravity of 2.19 or less and a liquid lubricant into a sheet using a flat die so as to obtain a PTFE sheet; a step B of rolling the PTFE sheet by passing the sheet between a pair of rolls in a longitudinal direction of the sheet that is a direction of the extrusion in the step A; a step C of stretching the PTFE sheet in a transverse direction perpendicular to the longitudinal direction of the sheet; a step D of removing the liquid lubricant from the PTFE sheet that has been rolled in the step B and stretched in the step C; and a step E of stretching the PTFE sheet, from which the liquid lubricant has been removed in the step D, both in the longitudinal direction of the sheet and in the transverse direction of the sheet so as to obtain a porous PTFE membrane.

Another aspect of the present invention provides a method for producing a waterproof air-permeable member, including a step of connecting a fixing member to a connecting region of a porous PTFE membrane, the connecting region surrounding an air-permeable region of the porous PTFE membrane. This method further includes a step of preparing the porous PTFE membrane, the step being the method for producing a porous PTFE membrane according to the present invention.

Still another aspect of the present invention provides a method for producing an air filter medium, including a step of bonding a porous PTFE membrane and an air-permeable support member. This method further includes a step of preparing the porous PTFE membrane, the step being the method for producing a porous PTFE membrane according to the present invention.

Advantageous Effects of Invention

The porous PTFE membrane production method of the present invention is suitable for the production of porous PTFE membranes for use as waterproof air-permeable members. This production method makes it possible to obtain a porous PTFE membrane having both improved water resistance and improved air permeability. In particular, the present invention makes it possible to produce a porous PTFE membrane having both excellent water resistance and excellent air permeability in spite of its single-layer structure.

The porous PTFE membrane production method of the present invention is also suitable for improving the PF values of porous PTFE membranes for use in air filter media. This production method makes it possible to increase the PF value of a porous PTFE membrane, in particular, while suppressing an increase in the mass per unit area. A low mass per unit area is a preferred feature that contributes not only to a reduction in the cost of raw materials but also to a reduction in the weight of the resulting product. The present invention makes it possible to provide a porous PTFE membrane and an air filter medium each having a high PF value and thus having an advantage over conventional ones in terms of the efficiency in the use of a PTFE material.

BRIEF DESCRIPTION OF DRAWINGS

FIG. 1 is a cross-sectional view (a) and a plan view (b) showing an embodiment of a waterproof air-permeable member according to the present invention.
FIG. 2 is a cross-sectional view showing another embodiment of the waterproof air-permeable member according to the present invention.
FIG. 3 is a diagram showing the water entry pressures and air permeabilities of porous PTFE membranes according to the present invention and those of conventional porous PTFE membranes.
FIG. 4 is a scanning electron microscope (SEM) micrograph of a porous PTFE membrane obtained in Example A14.
FIG. 5 is a SEM micrograph of a porous PTFE membrane obtained in Example A15.
FIG. 6 is a SEM micrograph of a porous PTFE membrane obtained in Example A16.
FIG. 7 is a SEM micrograph of a porous PTFE membrane obtained in Comparative Example A5.
FIG. 8 is a SEM (scanning electron microscope) micrograph of a porous PTFE membrane obtained in Example B2.
FIG. 9 is a SEM micrograph of a porous PTFE membrane obtained in Comparative Example B3.
FIG. 10 is a SEM micrograph of a porous PTFE membrane obtained in Comparative Example B4.
FIG. 11 is a perspective view showing an example of an air filter unit.

DESCRIPTION OF EMBODIMENTS

Conventionally, a mixture containing a PTFE fine powder and a liquid lubricant is basically extruded into a round bar form. This is because there is no need to extrude the mixture into a sheet form only for the purpose of obtaining a PTFE sheet because the round bar is rolled into a sheet anyway in the subsequent rolling step. In contrast, in the production method of the present invention, the mixture is extruded into a sheet form using a flat die (T-die) (Step A).

Next, the PTFE sheet extruded from the die is rolled by being passed between the pair of rolls in its longitudinal direction (an MD direction or a machine direction, which is the extrusion direction in the step A) (Step B). Roll rolling is conventionally performed. However, since rolling is conventionally performed on a PTFE molded body (PTFE bar) obtained by extruding the mixture into a round bar form, the PTFE molded body is rolled out in its transverse direction perpendicular to the longitudinal direction (a TD direction, which is a direction perpendicular to the machine direction) so as to obtain an extended thin sheet.

In contrast, in the present invention, a pre-extruded sheet-like PTFE molded body (PTFE sheet) is subjected to rolling. Therefore, the PTFE sheet is stretched primarily in the rotational direction of the surface of the rolls, that is, the longitudinal direction of the PTFE sheet. A stress applied to the PTFE molded body and the resulting stretching direction are different from those in the conventional methods, although basically the same apparatus is used.

It is preferable to perform the step B while maintaining the length of the PTFE sheet in the transverse direction. In this case, the PTFE sheet is stretched only in its longitudinal direction. Specifically, this rolling can be performed by passing the PTFE sheet between a pair of pressure rolls for rolling while pulling the sheet by a pull roll provided downstream of the pair of pressure rolls in the sheet feeding direction. During the rolling, if the rotational speed of the pull roll is set to a slightly higher speed than that of the pressure rolls, the PTFE sheet is stretched in its longitudinal direction, with the length of the sheet in the transverse direction being maintained unchanged.

Subsequently, the rolled PTFE sheet is stretched in its transverse direction (Step C). Thus, in these stretching steps, the PTFE sheet containing the liquid lubricant is stretched in the longitudinal direction and then in the transverse direction sequentially.

The subsequent steps D and E are performed basically in the same manner as in the conventional methods. Specifically, first the PTFE sheet is heated to remove the liquid lubricant (Step D). Subsequently, the PTFE sheet is stretched in its longitudinal direction and transverse direction to produce a porous PTFE membrane (Step E). Preferably, the step E is performed at a temperature lower than the melting point of PTFE. Then, the porous PTFE membrane may be heated at a temperature equal to or higher than the melting point of PTFE so as to be sintered (Step F).

As conventionally performed, the stretch ratio is adjusted as appropriate in the step E to obtain desired properties. The area stretch ratio calculated as the product of the stretch ratio in the longitudinal direction and the stretch ratio in the transverse direction is adjusted as appropriate for the intended use of the resulting porous PTFE membrane. When a porous PTFE membrane is produced for use as a waterproof air-permeable member, the appropriate area stretch ratio is, for example, 4 or more and less than 150. In order to achieve a good balance between the air permeability and the water resistance, the area stretch ratio is preferably 16 or more and 140 or less, and particularly preferably 30 or more and 140 or less. In some cases, the area stretch ratio is preferably 50 or more and 140 or less. If high air permeability is not required, the area stretch ratio may be 16 or more and less than 30. On the other hand, when a porous PTFE membrane is produced for use as a collection layer for an air filter medium, the appropriate area stretch ratio is 150 or more and 700 or less.

The porous PTFE membrane obtained through the above steps sometimes exhibits new distinctive features in its membrane structure that have not been observed in conventional porous PTFE membranes. Presumably, the extrusion using a flat die (Step A) and the sequential wet stretchings of the PTFE sheet in the longitudinal direction and the transverse direction (Steps B and C) contribute to the exhibition of these features. More specifically, it is presumed that the fibrillation of the PTFE fine powder is affected by the stress applied thereto in the flat die and the stress applied thereto by the sequential wet stretchings, which causes a change in the membrane structure.

This membrane structure has specific features compared with those of the membrane structure of porous PTFE membranes obtained by conventional typical production methods in which a round bar-shaped PTFE molded body obtained by extrusion is rolled into a sheet and the sheet is subjected to stretching to make it porous without being subjected to wet stretching in the transverse direction. The features of the membrane structure are as follows.

First, the diameter of fibrils is reduced. Second, the size of "nodes" is significantly reduced and is too small to identify as nodes in a conventional membrane structure, and the number of "nodes" per unit membrane volume is increased. Third, the ratio of fibrils extending in directions other than the stretching directions is increased, in other words, the fibrils are oriented more randomly and extend more isotropically. In view of these features, it is a reasonable guess that the PTFE fine powder becomes more susceptible to fibrillation. In addition, this membrane structure, in which thin fibrils extend not in a specific direction but in more random directions and nodes are divided into smaller ones, is basically suitable for improving both the water resistance and air permeability of the porous PTFE membrane. In particular, when the area stretch ratio of a porous PTFE membrane having this membrane structure is increased to improve its air permeability, the fibrillation is significantly promoted and thus not only the air permeability but also the water resistance is improved in some cases.

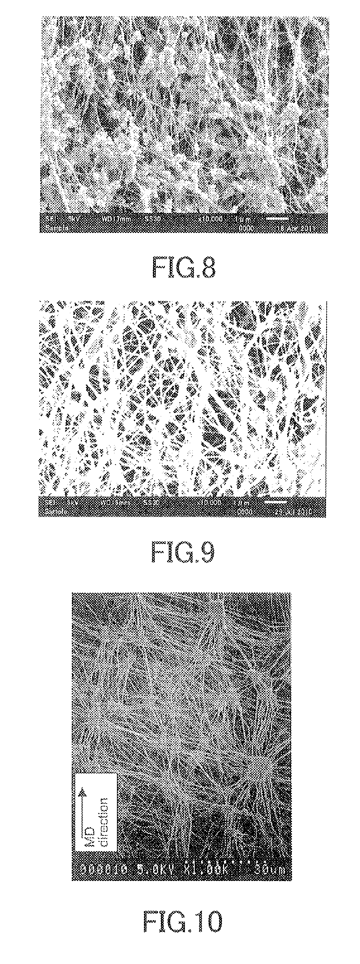

As shown in FIG. 8, the size and shape of the fine particles, herein referred to as "nodes", are significantly different from those of conventional nodes (see FIG. 10) in some cases. There is room for discussion whether these particles can be identified as the conventional nodes, but they are referred to as "nodes" herein for descriptive purposes.

It is preferable to use a PTFE fine powder having a standard specific gravity of 2.19 or less, particularly 2.16 or less, as a raw material. The standard specific gravity, which is also referred to as "SSG", is the specific gravity determined by the measurement method according to Japanese Industrial Standards (JIS) K6892. It is known that the standard specific gravity tends to be negatively correlated with the average molecular weight (the smaller the standard specific gravity, the higher the average molecular weight). For example, the standard specific gravity and the average molecular weight of Fluon CD-123 (manufactured by Asahi Fluoropolymers, Co., Ltd.) are 2.155 and 12,000,000, respectively. The standard specific gravity and the average molecular weight of Fluon CD-145 (manufactured by Asahi Fluoropolymers, Co., Ltd.) are 2.165 and 8,000,000, respectively. The standard specific gravity and the average molecular weight of Fluon CD-1 (manufactured by Asahi Fluoropolymers, Co., Ltd.) are 2.20 and 2,000,000, respectively.

The present invention makes it possible to obtain an improved porous PTFE membrane suitable for use as a waterproof air-permeable member. This porous PTFE membrane satisfies the following relational expressions (A-1) to (A-3) when, for example, the air permeability in terms of Frazier number is represented as F [cm$^3$/sec/cm$^2$] and the water entry pressure is represented as R [MPa].

$$0.2 \leq F \leq 4.0 \qquad (A\text{-}1)$$

$$0.2 \le R \le 1.0 \qquad (A\text{-}2)$$

$$R \ge -0.1F + 0.5 \qquad (A\text{-}3)$$

As used herein, the Frazier number is the value measured with a Frazier type tester specified by JIS L1096, and the water entry pressure is the value measured using a water resistance tester (high pressure method) specified by JIS L1092.

It is known that when the air permeability measured by the air permeability measurement B method (Gurley test method) defined by JIS L1096 is expressed in Gurley number G [sec/100 ml], the Frazier number can be calculated by converting the Gurley number G using the following relational expression (A-4).

$$F = 1.57/G \qquad (A\text{-}4)$$

It is also possible to obtain a porous PTFE membrane that satisfies the following relational expression (A-3a) as well as the relational expressions (A-1) and (A-2).

$$R \ge -0.1F + 0.6 \qquad (A\text{-}3a)$$

The present invention also makes it possible to obtain a porous PTFE membrane that satisfies the following relational expression (A-1a) as well as the relational expressions (A-2) and (A-3). This porous PTFE membrane is suitable for use in a housing (for example, an automotive headlamp) that requires relatively high air permeability. The present invention also makes it possible to obtain a porous PTFE membrane that satisfies the relational expression (A-2a) as well as the relational expression (A-1a). When these relational expressions are satisfied, the relational expression (A-3) and the relational expression (A-3a) automatically hold.

$$1.0 \le F \le 4.0 \qquad (A\text{-}1a)$$

$$0.5 \le R \le 1.0 \qquad (A\text{-}2a)$$

Waterproof air-permeable members require a limited range of air permeability and a very high water resistance for some intended uses. For example, in the case where a thin porous PTFE membrane is used in order to propagate acoustic energy mainly by vibrations of the porous PTFE membrane itself, the most important property to be focused on is the water entry pressure. The present invention also makes it possible to provide a porous PTFE membrane suitable for this use. This porous PTFE membrane satisfies, for example, the following relational expressions (A-1b) and (A-2b). When these relational expressions are satisfied, the relational expression (A-3) automatically holds.

$$0.2 \le F < 1.0 \qquad (A\text{-}1b)$$

$$0.5 \le R \le 1.0 \qquad (A\text{-}2b)$$

The present invention also makes it possible to provide a porous PTFE membrane having a water entry pressure R of 0.6 or more. The upper limit of the value of R is not particularly limited, but it may be 0.9 or less, and further 0.8 or less.

The present invention makes it possible to improve both the water resistance and air permeability of a porous PTFE membrane even if the membrane is not a multilayer membrane having two or more porous PTFE layers but a single-layer membrane. Generally, single-layer membranes are advantageous over multilayer membranes in terms of production cost. The number of layers of a porous PTFE membrane can be determined by, for example, cross-sectional observation using a scanning electron microscope.

The present invention makes it possible to obtain an improved porous PTFE membrane suitable for use as a collection layer for an air filter. The PF value of this porous PTFE membrane is, for example, 36 or more, as determined by the above equation (B-1), and the mass per unit area thereof is 0.90 g/m$^2$ or less.

Equation (B-1) can be expressed as follows if "Pa" is used as the unit of the pressure.

$$\text{PF value} = \{-\log(\text{PT (\%)}/100)/(\text{PL (Pa)}/9.8)\} \times 100$$

In this equation, PT is the permeability and is determined by PT (%) = 100-CE (%), as shown above as Equation (B-2). CE is the collection efficiency and is determined by a value measured using dioctyl phthalate particles with a particle diameter of 0.10 $\mu$m to 0.20 $\mu$m under a condition of a permeate flow rate of 5.3 cm/sec. PL is the pressure loss and is determined by a value measured under a condition of a permeate flow rate of 5.3 cm/sec.

The increase in the PF values of porous PTFE membranes as conventionally proposed has been achieved by increasing the distance between fibrils while keeping the diameter of fibrils small. According to Patent Literature 2 focusing not on the increase of the distance between fibrils but only on the reduction of the fibril diameter, PF values up to 35 are obtained (Example 2). As a matter of fact, it seems that about 35 is the highest possible PF value and cannot be increased anymore only by reducing the diameter of fibrils. According to Patent Literature 3, the collection efficiency of each fibril is decreased by interaction between fibrils, which prevents the increase of the PF value (paragraphs 0007 to 0012). In Patent Literature 3, the amount of a liquid lubricant to be mixed with a PTFE fine powder is increased to reduce the filling factor of the resulting porous PTFE membrane and thereby to increase the distance between fibrils. Examples of Patent Literature 3 disclose porous PTFE membranes of Examples 1 and 2, having an average fibril diameter (average fiber diameter) of 49 to 53 nm and a PF value of 39.2 to 42.0. The filling factor of these membranes is 4.0 to 4.5% and the thickness thereof is 15.0 to 16.0 $\mu$m. Therefore, the mass per unit area of these membranes is about 1.30 to 1.56 g/m$^2$, as calculated based on the specific gravity of PTFE. There is room for improvement in these values in terms of the efficiency in the use of a PTFE material.

The porous PTFE membrane disclosed in Patent Literature 3 is adjusted so as to increase the distance between fibrils while maintaining the basic shape of fibrils and nodes commonly observed in conventional membranes. The collection efficiency per unit thickness CE(t) of this porous PTFE membrane is basically the same as that of conventional membranes. The CE(t) of the porous PTFE membranes of Examples of Patent Literature 3 is about 58 to 60%, as calculated by the method described later, which is almost the same as the CE(t) of the membranes of Comparative Examples. Presumably, a decrease in the pressure loss is the main reason why the porous PTFE membranes disclosed in Patent Literature 3 achieve high PF values.

As described above, an improvement in the shape of fibrils and nodes constituting the membrane makes it possible to provide a porous PTFE membrane having a PF value of 36 or more and a mass per unit area of 0.90 g/m$^2$ or less, as is confirmed by the examples described below.

According to the present invention, it is also possible to provide a porous PTFE membrane having an increased PF value, specifically 37 or more, further 38 or more, particularly 39 or more, and in some cases 40 or more. The porous PTFE membrane of the present invention can have a mass per unit area of 0.90 g/m$^2$ or less, further 0.87 g/m$^2$ or less, and particularly 0.85 g/m$^2$ or less, while maintaining its PF value in the above range of values. Needless to say, a low mass per unit area is a desirable feature that leads directly to a reduction in material cost and product weight. The lower limit of the mass per unit area is not particularly limited, but the mass per unit area of the porous PTFE membrane of the present invention is, for example, 0.40 g/m$^2$ or more, and particularly 0.50 g/m$^2$ or more.

It is also possible to increase the PF value without excessively reducing the average fibril diameter (average fiber diameter) of the porous PTFE membrane. The average diameter of the fibrils of the porous PTFE membrane of the present invention is, for example, 55 nm or more, and further 57 nm or more. Not-too-thin fibrils are useful in maintaining the strength of the membrane. The upper limit of the average diameter of fibrils is not particularly limited, but the average diameter of the fibrils of the porous PTFE membrane of the present invention is, for example, 83 nm or less, and particularly 80 nm or less. The porous PTFE membrane of the present invention can achieve a larger fibril diameter than conventional porous PTFE membranes as disclosed in Patent Literature 3, as long as they are compared within the range of comparable PF values.

The filling factor of the porous PTFE membrane of the present invention for use in an air filter medium is, for example, 2.7% or more, further 2.9% or more, and it is, for example, 3.9% or less.

The filling factor (FF) can be related to the void content (porosity) (VC) of the membrane, as shown in the following Equation (B-3).

$$\text{FF (\%)} = 100 - \text{VC (\%)} \qquad \text{(B-3)}$$

According to the present invention, it is possible to increase the collection efficiency per 1 $\mu$m thickness (CE(t))

of the porous PTFE membrane to 76% or more, further 80% or more, and in some cases 82% or more. The CE(t) is calculated by the following Equation (B-4).

$$CE(t) \ (\%) = \{1 - (1 - CE \ (\%)/100)^{1/t}\} \times 100 \qquad (B\text{-}4)$$

The CE (collection efficiency) values used herein are also those obtained under the measurement conditions described above. Herein, t is the thickness of the porous PTFE membrane, and the thickness is measured in units of $\mu$m.

Equation (B-4) is derived from the fact that the permeability PT, the permeability per unit thickness PT(t), the collection efficiency CE, and the collection efficiency per unit thickness CE(t) satisfy the relations: PT = PT(t)$^t$, CE(t) = 1-PT(t), and CE = 1- PT, respectively.

A porous PTFE membrane obtained by a conventional production method usually has a too high pressure loss for use in an air filter medium if the collection efficiency per 1 $\mu$m thickness of the membrane is adjusted to about 76% or more. However, according to the present invention, it is possible to prevent a significant increase in the pressure loss even if the collection efficiency per 1 $\mu$m thickness of the porous PTFE membrane is increased to a value as high as the value mentioned above.

Therefore, the present invention also makes it possible to provide a porous PTFE membrane having a collection efficiency per 1 $\mu$m thickness CE(t) of 76% or more and less than 85% and a pressure loss per 1 $\mu$m thickness PL(t) of 13 Pa or more and less than 20 Pa, more specifically 15 Pa or more and 19.5 Pa or less, as calculated by the following Equation (B-5).

The present invention also makes it possible to provide a porous PTFE membrane having a collection efficiency per 1 $\mu$m thickness CE(t) of 85% or more and 95% or less and a pressure loss per 1 $\mu$m thickness PL(t) of 18 Pa or more and 25 Pa or less, more specifically 20 Pa or more and 25 Pa or less, as calculated by the following Equation (B-5).

$$PL(t) \ (Pa) = PL \ (Pa)/t \ (\mu m) \qquad (B\text{-}5)$$

The pressure loss PL values used herein are also those obtained under the measurement conditions described above.

As described above, the improvement proposed in Patent Literature 3 is not intended to improve the collection efficiency per unit thickness. In the case of a production method to which improvements of the present invention are not fully applied, even if the production conditions are modified by a technique known to those skilled in the art, specifically by adjustment of the stretch ratio, the pressure loss per 1 $\mu$m thickness of a porous membrane whose collection efficiency per 1 $\mu$m thickness is adjusted to about 74 to 75% is much higher than 20 Pa (see Comparative Example B1 described below).

According to the present invention, it is also possible to obtain a porous homo-PTFE membrane having both a high PF value and a not-too-high mass per unit area within the ranges mentioned above. The term "homo-PTFE" refers to a polymer made of only one type of monomer, and the monomer is TFE (tetrafluoroethylene), as is well known. On the other hand, a copolymer containing TFE and a monomer other than TFE is referred to as modified PTFE. Functional materials such as a photocatalyst, carbon black, and a moisture absorbent may be added to a porous homo-PTFE membrane, when necessary. In this light, it should be noted that a porous homo-PTFE membrane is not necessarily a membrane consisting of only homo-PTFE. In this description, the "porous homo-PTFE membrane" refers specifically to a porous membrane in which the polymer constituting the membrane is made of only one type of monomer, and the monomer is TFE.

According to the present invention, it is also possible to obtain a porous PTFE membrane having both a high PF value and a not-too-high mass per unit area even if the membrane is not a multilayer membrane but a single-layer membrane. Generally, single-layer membranes are advantageous over multilayer membranes in terms of production cost. That is, it is preferable that the porous PTFE membrane of the present invention be a single-layer membrane.

Hereinafter, each step of the production method of the present invention is described in more detail.

In the step A, the mixing ratio of the PTFE fine powder and the liquid lubricant is suitably adjusted so that the mixture contains, for example, 5 to 50 parts by mass of the liquid lubricant, particularly 5 to 30 parts by mass of the liquid lubricant, per 100 parts by mass of the PTFE fine powder. As the liquid lubricant, a conventionally used hydrocarbon oil such as liquid paraffin or naphtha can be used. In the present invention, there is no need to add a large amount of liquid lubricant.

In the step A, a flat die is used for extrusion of the mixture containing the PTFE fine powder. Examples of the flat die (T-die) include a straight manifold type T-die, a coat hanger type T-die, and a fishtail type T-die. Since the extrusion molding in the step A is not extrusion molding of a molten material but extrusion molding of a pasty material containing an auxiliary agent, the viscosity of the mixture to be extruded is high. Therefore, it is most suitable to use a fishtail type T-die (fishtail die) among the above-mentioned dies.

The appropriate thickness of the PTFE sheet obtained by the extrusion in the step A is 0.5 to 5.0 mm, particularly 1.2 to 2.0 mm.

In the step B, the PTFE sheet containing the liquid lubricant is rolled out into a thinner sheet than the sheet obtained by the extrusion. Thus, a sheet having a uniform thickness is obtained. This rolling can be performed, for example, as a process in which the length of the PTFE sheet in the transverse direction is not changed. In this case, the rolling in the step B is a process for stretching the PTFE sheet only in its longitudinal direction.

Specifically, it is preferable that the rolling in the step B be performed by passing the PTFE sheet between a pair of pressure rolls for rolling while pulling the sheet by a pull roll provided downstream of the pair of pressure rolls in the sheet feeding direction. During the rolling, if the rotational speed of the pull roll is set to a slightly higher speed than that of the pressure rolls, the PTFE sheet is stretched in its longitudinal direction, with the length of the sheet in the transverse direction being maintained unchanged.

Preferably, the rolling of the PTFE sheet in the step B is performed so that the length of the sheet in the transverse direction after the rolling is in a range of 90% to 110%, and preferably in a range of 95% to 105%, of the length of the sheet in the transverse direction before the rolling. In this description, if a change in the length of the sheet in the transverse direction is in the above range, it is deemed that the sheet has been rolled "with the length of the sheet in the transverse direction being maintained unchanged".

In the step B, it is preferable to roll the PTFE sheet into a sheet having a thickness of 50 to 2000 $\mu$m, particularly 100 to 900 $\mu$m. In the step B, it is preferable to roll the PTFE sheet into a sheet having a reduced thickness to 70% or less, for example 5 to 60%, of the thickness of the sheet before the rolling. In the step B, the PTFE sheet may be rolled into a sheet having a reduced thickness to 30% or less, for example 10 to 15%, of the thickness of the sheet before the rolling.

In the step C, the PTFE sheet containing the liquid lubricant is stretched in its transverse direction. This stretching may be performed using a tenter, which has been frequently used for stretching in the transverse direction. The appropriate stretch ratio in the step C is 1.2 to 10, particularly 2.0 to 8.0, and 5.0 to 8.0 in some cases. If the stretch ratio is too low, it is difficult to change the membrane structure sufficiently. On the other hand, if the stretch ratio is too high, the strength in the longitudinal direction may decrease or the membrane thickness may become uneven.

In the step D, the liquid lubricant is removed from the PTFE sheet that has been stretched in the transverse direction. This step may be performed by drying the PTFE sheet, specifically by maintaining the PTFE sheet containing the liquid lubricant at a temperature suitable for removing the liquid lubricant, as is conventionally done. The temperature suitable for drying is about 100°C to 300°C.

The rolling in the step B and the stretching in the step C need to be performed on the PTFE sheet containing the liquid lubricant. Therefore, it is preferable to perform these steps while maintaining the temperature of the PTFE sheet at 100°C or lower, preferably at 60°C or lower, and 40°C or lower in some cases.

In the step E, the PTFE sheet from which the liquid lubricant has been removed is stretched in its longitudinal direction and transverse direction sequentially. Thus, the sheet is made porous. The stretching in the longitudinal direction may be performed by the roll stretching method utilizing a difference in the rotational speed of rolls, and the stretching in the transverse direction may be performed by the tenter stretching method using a tenter, as is conventionally done. Any of the stretching in the longitudinal direction and the stretching in the transverse direction may be performed earlier than the other.

The stretch ratio in the step E has a significant influence on the membrane structure and the membrane properties of the resulting porous PTFE membrane. The stretch ratio in the step E may be set as appropriate according to the desired membrane properties.

It is difficult to definitely determine a preferred range of stretch ratios because the appropriate stretch ratio varies depending on the conditions of rolling, stretching, etc. in each step from the step A to the step E. When a porous PTFE membrane is produced for use as a waterproof air-permeable member, it is normal that the stretch ratio in the longitudinal direction is suitably 2 to 50, particularly suitably 4 to 20, and the stretch ratio in the transverse direction is suitably 3 to 70, particularly suitably 4 to 30. When a porous PTFE membrane is produced for use as a collection layer for an air filter medium, it is normal that the stretch ratio in the longitudinal direction is suitably 5 to 30, particularly suitably 10 to 20, and the stretch ratio in the transverse direction is suitably 10 to 40, particularly suitably 20 to 30. A preferred range of the stretching factor obtained by multiplying the area stretch ratio in the longitudinal direction (longitudinal stretch ratio) and the stretch ratio in the transverse direction (transverse stretch ratio), that is, the area stretch ratio, is as described above. When a porous PTFE membrane is produced for use as a collection layer for an air filter medium, the area stretch ratio is preferably 250 or more, and particularly preferably 300 or more, to reduce the pressure loss. The area stretch ratio is preferably 700 or less, and particularly preferably 600 or less, to prevent a significant decrease in the collection efficiency. The preferred area stretch ratio of a porous PTFE membrane for use in an air filter medium is 300 or more and 700 or less.

Preferably, the stretching in the step E is performed at a temperature lower than the melting point of PTFE (327°C), for example, at 60°C to 300°C, particularly at 110°C to 150°C. Generation of thinner fibrils is promoted by the stretching in the step E.

In the step F, the porous PTFE membrane is heated to a temperature equal to or higher than the melting point of PTFE. This heating step is generally referred to as "sintering" and results in an increase in the strength of the porous PTFE sheet. The sintering temperature is suitably 327°C to 460°C.

The thickness of the porous PTFE membrane of the present invention is not particularly limited, but the thickness is suitably 1 $\mu$m to 300 $\mu$m, and further suitably 2 $\mu$m to 50 $\mu$m. In particular, when the porous PTFE membrane is produced for use as a collection layer for an air filter, the thickness thereof is suitably 5 $\mu$m to 15 $\mu$m, further suitably 7 $\mu$m to 13 $\mu$m. The thickness may be 8 $\mu$m to 12 $\mu$m, for example.

The porous PTFE membrane according to the present invention can have the properties suitable for use as a waterproof air-permeable membrane. Hereinafter, embodiments of the waterproof air-permeable member of the present invention will be described with reference to the drawings.

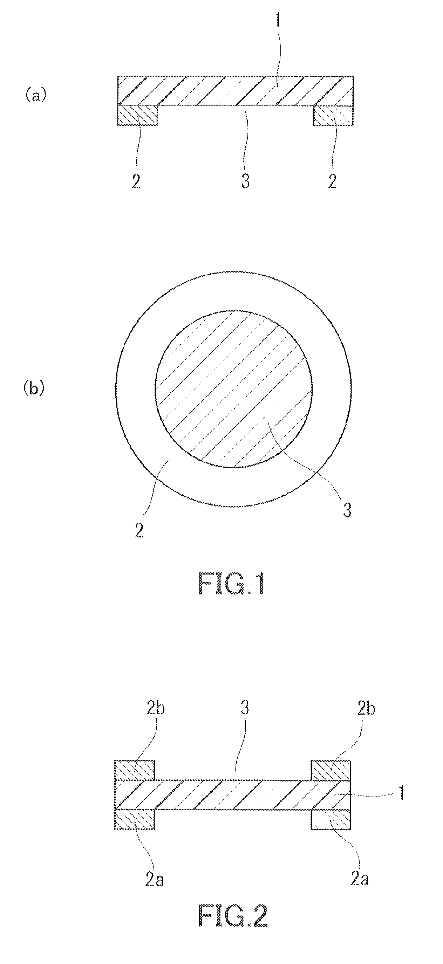

A waterproof air-permeable member shown in FIG. 1 includes a porous PTFE membrane 1 and a fixing member 2 for fixing the porous PTFE membrane 1 to a housing that should be ventilated. The fixing member 2 is connected to the porous PTFE membrane 1 in a connecting region of the porous PTFE membrane 1. The connecting region surrounds an air permeable region 3 of the membrane 1. The surface of the fixing member 2 opposite to the surface connected to the porous PTFE membrane 1 is bonded to the surface of the housing so as to surround the opening provided in the housing. Thus, the porous PTFE membrane 1 is fixed to the housing. This configuration allows air to pass through the opening of the housing and the air permeable region 3 of the membrane 1 and thus ensures the ventilation of the housing, while the water resistance of the porous PTFE membrane 1 prevents water from intruding into the housing.

A ring-shaped fixing member 2 is used in FIG. 1, but the shape of the fixing member 2 is not limited to the ring shape. The fixing member 2 shown in FIG. 1 is a double-sided adhesive tape, but the shape of the fixing member 2 is not limited to the tape shape. A resin member formed into a shape fitted into the opening of the housing may be used as the fixing member 2.

A waterproof air-permeable member shown in FIG. 2 includes the porous PTFE membrane 1 and a plurality of fixing members 2a and 2b. Like the fixing member 2 (FIG. 1), the fixing members 2a and 2b have a ring shape when viewed from directly above the membrane surface, and surround the air permeable regions 3 on both principal surfaces of the porous PTFE membrane 1. This waterproof air-permeable member is suitable, for example, for use in a housing of an electronic device. In this case, for example, the fixing member 2a is bonded to a device (for example, a speaker) mounted in the housing, and the fixing member 2b is bonded to the inner surface of the housing so as to surround the opening of the housing.

The porous PTFE membrane according to the present invention can also have the properties suitable for use as a collection layer for an air filter. According to the present invention, it is also possible to provide a porous PTFE membrane having an increased PF value while preventing a significant decrease in the average fibril diameter (average fiber diameter). That is, according to the present invention, it is possible to provide a porous PTFE membrane having an increased PF value of 36 or more, further 37 or more, particularly 38 or more, and in some cases 40 or more, while maintaining the average fiber diameter in a range of 55 nm or more, further 57 nm or more, particularly 58 nm or more, and in some cases 60 nm or more, for example, in a range of 55 to 83 nm, particularly in a range of 55 to 80 nm. The porous PTFE membrane having a large average fiber diameter is advantageous in maintaining the strength.

In addition, according to the present invention, it is possible to provide a porous PTFE membrane having a collection efficiency of 99.999% (5N, as expressed in the form of the number of consecutive 9s) or more, further 99.9999% (6N) or more, particularly 99.99999% (7N) or more, and more particularly 99.999999% (8N) or more. The porous PTFE membrane of the present invention can achieve a pressure loss of, for example, 220 Pa or less, or 200 Pa or less in some cases, while maintaining a collection efficiency as high as the above range of values.

In order to use the obtained porous PTFE membrane as an air filter medium, it is desirable to laminate the membrane with an air-permeable support member. This laminating step may be performed by bonding the porous PTFE membrane and the air-permeable support member together by a conventionally used method.

Preferably, the fibers constituting the air-permeable support member are made of a thermoplastic resin, specifically polyolefin (for example, polyethylene (PE) or polypropylene (PP)), polyester (for example, polyethylene terephthalate (PET)), polyamide, or a composite material of these.

As the air-permeable support member, woven fabric, nonwoven fabric, felt, or the like can be used, but nonwoven fabric is often used. A typical nonwoven fabric known as a preferable air-permeable support member is made of conjugated fibers having a core-sheath structure in which the melting point of the core component (for example, PET) is higher than that of the sheath component (for example, PE). This nonwoven fabric is suitable for heat lamination in which the sheath component is melted and bonded with the porous PTFE membrane.

The lamination of the porous PTFE membrane and the air-permeable support member can also be performed not only by the above-mentioned heat lamination but also by adhesive lamination or the like. In the adhesive lamination, it is appropriate to use a hot melt type adhesive, for example.

The layered structure of the porous PTFE membrane and the air-permeable support member is not particularly limited, but it is preferably a structure in which at least one air-permeable support member is disposed on each of the surfaces of the porous PTFE membrane (typically, a three layer structure including an air-permeable support member, a porous PTFE membrane, and an air-permeable support member in this order). However, the layered structure may be a structure including two porous PTFE membranes (for example, a five layer structure including an air-permeable support member, a porous PTFE membrane, an aid-permeable support member, a porous PTFE membrane, and an air-permeable support member in this order), if required. It is also possible to use a structure including an air-permeable support member with a small diameter as a pre-filter (for example, a four layer structure including an air-permeable support member (pre-filter), an air-permeable support member, a porous PTFE membrane, and an air-permeable support member in this order from the upstream side of the airflow) in some applications.

Air filter media are usually subjected to pleating by a known technique. Pleating is performed by folding a filter medium along mountain folds and valley folds that are formed alternately and in parallel to each other on the surface of the filter medium into an accordion shape (a continuous W shape), for example, using a reciprocating pleating machine. The pleated air filter medium is sometimes referred to as an air filter pack. A spacer may be disposed in the air filter pack to maintain the pleated shape. As the spacer, a resin cord called a bead is often used. A bead is disposed on the filter medium in a direction perpendicular to the mountain folds (valley folds) (in a direction going up the mountains and down the valleys). Preferably, a plurality of beads that are evenly spaced apart from each other are disposed on the filter medium so that they extend in this direction. Preferably, the beads are disposed on both the front and back surfaces of the filter medium. Typically, the beads are formed by melting a resin such as polyamide or polyolefin and applying the molten resin.

The periphery of the pleated air filter medium (air filter pack) is supported by a frame (supporting frame), if necessary. Thus, an air filter unit is obtained.

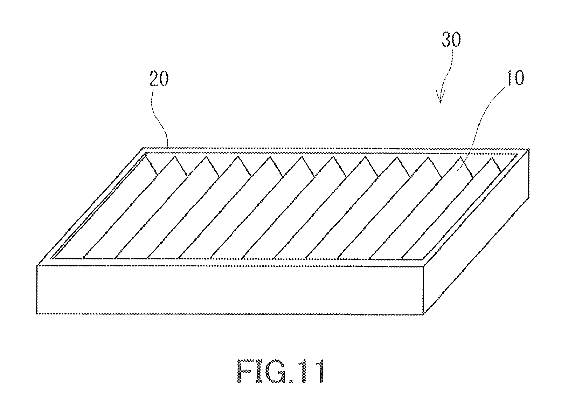

As the frame, a metal or resin member is used for the intended purpose, such as for use in an air filter. When a resin frame is used, a filter medium may be fixed to the frame while forming the frame by injection molding. FIG. 11 shows an example of an air filter unit. An air filter unit 30 includes a pleated air filter medium 10 and a frame 20 for fixing the outer periphery of the air filter medium 10.

According to the present invention, it is also possible to provide an air filter medium including a single-layer porous PTFE membrane and air-permeable support members disposed on both surfaces of the porous membrane, and having a collection efficiency of 99.999999% (8N) or more, a pressure loss of 250 Pa or less, and a PF value of 35 or more and 45 or less. Conventionally, the collection efficiency of an air filter medium having only one single-layer porous PTFE membrane as a particle collection layer does not reach a 8N level under the condition where the pressure loss is kept at about 250 Pa or lower. The media produced according to the present invention are shown as some of the examples (Examples B1 to B3) described below.

EXAMPLES

Hereinafter, the present invention will be described in further detail by way of examples, but the present invention is not limited to the following examples.

[Waterproof Air-permeable Member]

(Example A1)

100 parts by weight of PTFE fine powder ("Fluon CD-123N" (SSG of 2.155) manufactured by Asahi Fluoropolymers, Co., Ltd.) and 19 parts by weight of a liquid lubricant (dodecane) were mixed homogeneously and the resulting mixture was preformed into a round bar form. Next, this preformed body was extruded into a sheet form using an extruder equipped with a fishtail die. The thickness of the PTFE sheet thus obtained by the extrusion was 1.5 mm, and the width thereof was 20 cm.

Furthermore, the PTFE sheet was rolled by being passed between a pair of metal pressure rolls. This rolling was performed while pulling the PTFE sheet in its longitudinal direction using a pull roll provided downstream of the pressure rolls, so as to keep the length of the PTFE sheet in the transverse direction unchanged before and after the rolling. The thickness of the PTFE sheet obtained by the rolling was 0.2 mm.

Subsequently, the rolled PTFE sheet containing the liquid lubricant was stretched in its transverse direction at a stretch ratio of 3 using a tenter. Then, the stretched PTFE sheet was maintained at 150°C to remove the liquid lubricant.

Next, after the liquid lubricant was removed, the PTFE sheet was stretched by a biaxial stretching machine both in the longitudinal direction at a stretch ratio of 4 and in the transverse direction at a stretch ratio of 4 in an atmosphere at 300°C. Thus, an unsintered porous PTFE membrane was obtained. The area stretch ratio of the stretching performed after the liquid lubricant was removed was 16.

Finally, the unsintered porous PTFE membrane was sintered in a hot air furnace at 380°C, and a long strip of porous PTFE membrane was obtained. The thickness of this porous PTFE membrane was 30 $\mu$m.

(Example A2)

A porous PTFE membrane having a thickness of 17 $\mu$m was produced in the same manner as in Example A1, except that the PTFE sheet containing the liquid lubricant was stretched in its transverse direction at a stretch ratio of 5.

(Example A3)

A porous PTFE membrane having a thickness of 11 $\mu$m was produced in the same manner as in Example A1, except that the PTFE sheet containing the liquid lubricant was stretched in its transverse direction at a stretch ratio of 7.

(Example A4)

A porous PTFE membrane having a thickness of 20 $\mu$m was produced in the same manner as in Example A1, except that "601A" with a SSG of 2.150 manufactured by Dupont was used as a PTFE fine powder.

(Example A5)

A porous PTFE membrane having a thickness of 17 $\mu$m was produced in the same manner as in Example A4, except that the PTFE sheet containing the liquid lubricant was stretched in its transverse direction at a stretch ratio of 5.

(Example A6)

A porous PTFE membrane having a thickness of 14 $\mu$m was produced in the same manner as in Example A4, except that the PTFE sheet containing the liquid lubricant was stretched in its transverse direction at a stretch ratio of 7.

(Example A7)

A porous PTFE membrane having a thickness of 9 $\mu$m was produced in the same manner as in Example A1, except that the PTFE sheet from which the liquid lubricant had been removed was stretched in its longitudinal direction at a stretch ratio of 8 and in its transverse direction at a stretch ratio of 8. In this example, the area stretch ratio of the stretchings performed after the liquid lubricant was removed was 64.

(Example A8)

A porous PTFE membrane having a thickness of 5 $\mu$m was produced in the same manner as in Example A7, except that the PTFE sheet containing the liquid lubricant was stretched in its transverse direction at a stretch ratio of 5.

(Example A9)

A porous PTFE membrane having a thickness of 3 $\mu$m was produced in the same manner as in Example A7, except that the PTFE sheet containing the liquid lubricant was stretched in its transverse direction at a stretch ratio of 7.

(Example A10)

A porous PTFE membrane having a thickness of 6 $\mu$m was produced in the same manner as in Example A4, except that the PTFE sheet from which the liquid lubricant had been removed was stretched in its longitudinal direction at a stretch ratio of 8 and in its transverse direction at a stretch ratio of 8.

(Example A11)

A porous PTFE membrane having a thickness of 4 $\mu$m was produced in the same manner as in Example A10, except that the PTFE sheet containing the liquid lubricant was stretched in its transverse direction at a stretch ratio of 5.

(Example A12)

A porous PTFE membrane having a thickness of 3 $\mu$m was produced in the same manner as in Example A10, except that the PTFE sheet containing the liquid lubricant was stretched in its transverse direction at a stretch ratio of 7.

(Example A13)

A porous PTFE membrane having a thickness of 10 $\mu$m was produced in the same manner as in Example A10, except that the distance between the metal pressure rolls was adjusted so as to obtain a rolled PTFE sheet having a thickness of 0.4 mm. This rolling was also performed while pulling the PTFE sheet in its longitudinal direction using a pull roll provided downstream of the pressure rolls, so as to keep the length of the PTFE sheet in the transverse direction unchanged before and after the rolling.

(Example A14)

A porous PTFE membrane having a thickness of 30 $\mu$m was produced in the same manner as in Example A7, except that "Polyflon F-104" with a SSG of 2.17 manufactured by Daikin Industries, Ltd. was used as a PTFE fine powder.

(Example A15)

A porous PTFE membrane having a thickness of 3 $\mu$m was produced in the same manner as in Example A14, except that the PTFE sheet containing the liquid lubricant was stretched in its transverse direction at a stretch ratio of 5.

(Example A16)

A porous PTFE membrane having a thickness of 2 $\mu$m was produced in the same manner as in Example A14, except that the PTFE sheet containing the liquid lubricant was stretched in its transverse direction at a stretch ratio of 7.

(Comparative Example A1)

A porous PTFE membrane having a thickness of 120 $\mu$m was produced in the same manner as in Example A1, except that the step of stretching the rolled PTFE sheet containing the liquid lubricant in its transverse direction was omitted.

(Comparative Example A2)

A porous PTFE membrane having a thickness of 110 $\mu$m was produced in the same manner as in Example A4, except that the step of stretching the rolled PTFE sheet containing the liquid lubricant in its transverse direction was omitted.

(Comparative Example A3)

A porous PTFE membrane having a thickness of 20 $\mu$m was produced in the same manner as in Example A7, except that the step of stretching the rolled PTFE sheet containing the liquid lubricant in its transverse direction was omitted.

(Comparative Example A4)

A porous PTFE membrane having a thickness of 50 $\mu$m was produced in the same manner as in Example A13, except that the step of stretching the rolled PTFE sheet containing the liquid lubricant in its transverse direction was omitted.

(Comparative Example A5)

A porous PTFE membrane having a thickness of 40 $\mu$m was produced in the same manner as in Example A14, except that the step of stretching the rolled PTFE sheet containing the liquid lubricant in its transverse direction was omitted.

(Comparative Example A6)

A porous PTFE membrane having a thickness of 60 $\mu$m was produced in the same manner as in Comparative Example A3, except that the distance between the metal pressure rolls was adjusted so as to obtain a rolled PTFE sheet having a thickness of 0.6 mm. This rolling was also performed while pulling the PTFE sheet in its longitudinal direction using a pull roll provided downstream of the pressure rolls, so as to keep the length of the PTFE sheet in the transverse direction unchanged before and after the rolling.

(Comparative Example A7)

A porous PTFE membrane having a thickness of 80 $\mu$m was produced in the same manner as in Comparative Example A4, except that the distance between the metal pressure rolls was adjusted so as to obtain a rolled PTFE sheet having a thickness of 0.8 mm. This rolling was also performed while pulling the PTFE sheet in its longitudinal direction using a pull roll provided downstream of the pressure rolls, so as to keep the length of the PTFE sheet in the transverse direction unchanged before and after the rolling.

(Comparative Example A8)

A porous PTFE membrane having a thickness of 50 $\mu$m was produced in the same manner as in Comparative Example A5, except that the distance between the metal pressure rolls was adjusted so as to obtain a rolled PTFE sheet having a thickness of 0.4 mm. This rolling was also performed while pulling the PTFE sheet in its longitudinal direction using a pull roll provided downstream of the pressure rolls, so as to keep the length of the PTFE sheet in the transverse direction unchanged before and after the rolling.

(Comparative Example A9)

100 parts by weight of PTFE fine powder ("Polyflon F-104", SSG of 2.17, manufactured by Daikin Industries, Ltd.) and 19 parts by weight of a liquid lubricant (dodecane) were mixed homogeneously and the resulting mixture was preformed into a round bar shape. Next, this preformed body was paste-extruded into a round bar. The diameter of the extruded PTFE sheet was 44 mm.
The round bar-formed body was further pressed at 150 kN for 30 minutes to obtain a sheet with a thickness of 0.2 mm. Furthermore, the PTFE sheet was rolled by being passed between a pair of metal pressure rolls. This rolling was performed while pulling the PTFE sheet in its longitudinal direction using a pull roll provided downstream of the pressure rolls, so as to keep the length of the PTFE sheet in the transverse direction unchanged before and after the rolling. The subsequent steps were performed in the same manner as in Comparative Example A1. Thus, a porous PTFE membrane having a thickness of 80 $\mu$m was obtained.

(Comparative Example A10)

A porous PTFE membrane having a thickness of 120 $\mu$m was produced in the same manner as in Comparative Example A5, except that the PTFE sheet from which the liquid lubricant had been removed was stretched in its longitudinal direction at a stretch ratio of 4 and in its transverse direction at a stretch ratio of 4.

(Comparative Example A11)

An attempt was made to produce a porous PTFE membrane in the same manner as in Example A7, except that "Fluon CD-1" with a SSG of 2.20, manufactured by Asahi Fluoropolymers Co., Ltd. was used as a PTFE fine powder. However, the sheet was broken when it was stretched in its longitudinal direction at a stretch ratio of 8 and in its transverse direction at a stretch ratio of 8.

(Comparative Example A12)

An attempt was made to produce a porous PTFE membrane in the same manner as in Example A8, except that "Fluon CD-1" with a SSG of 2.20, manufactured by Asahi Fluoropolymers Co., Ltd. was used as a PTFE fine powder. However, the sheet containing the liquid lubricant was broken when it was stretched in its transverse direction at a stretch ratio of 5.
For each of the porous PTFE membranes obtained in Examples A1 to A16 and Comparative Examples A1 to A10, the water entry pressure and air permeability were measured. The water entry pressure was measured using a water resistance tester (high pressure method) specified by JIS L1092. As for the air permeability, the Gurley number G [sec/100 ml] was measured using a Gurley tester specified by JIS P8117, and the Gurley number G was converted into a Frazier number F using the relational expression (A-4). As for each of the porous PTFE membranes having a high air permeability, 300 ml of air, instead of 100 ml of air, was used for the measurement of the Gurley number to increase the measurement accuracy. Then, based on this measurement result, the time required for 100 ml of air to pass through the porous PTFE membrane was calculated. Thus, the Gurley number G was obtained. When 300 ml of air was used, one third of the obtained Gurley number was substituted, as a value of G, into the relational expression (A-4). Table 1 shows the results.

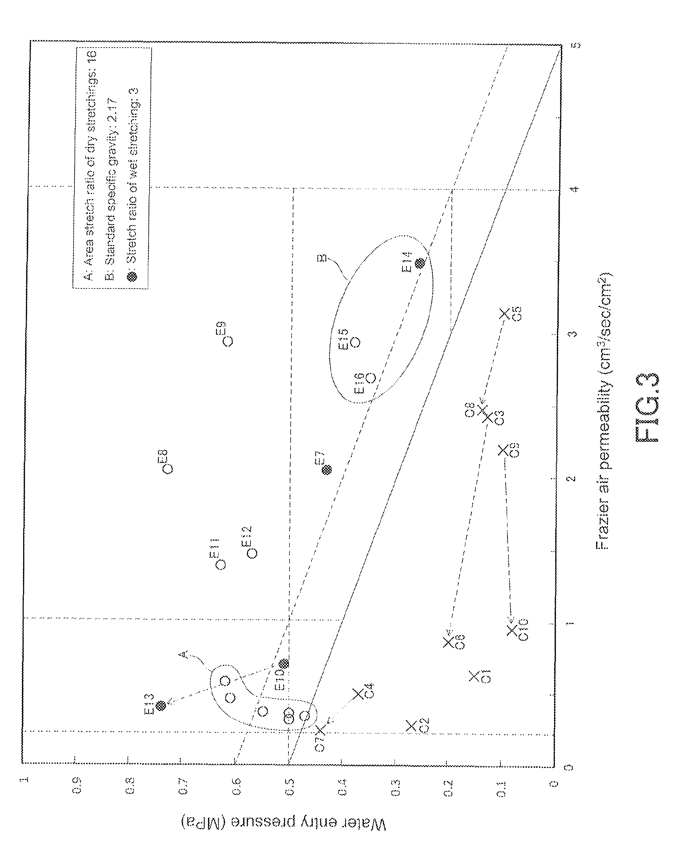

FIG. 3 shows the water entry pressures and air permeabilities thus measured. In FIG. 3, white circles and black circles represent Examples, and cross marks represent Comparative Examples. The numbers following "E" denote the numbers of Examples A, and the numbers following "C" denote the numbers of Comparative Examples A.

As indicated by a dashed line in FIG. 3, as the thickness of the porous PTFE membrane is increased by changing the thickness of the rolled sheet, the water entry pressure increases while the air permeability decreases. As shown in FIG. 3, since the water entry pressure and the air permeability are usually in a trade-off relationship, it is difficult to improve both of them. Furthermore, as indicated by an alternate long and short dashed line arrow in FIG. 3, the air permeability rather decreases by merely changing the shape extruded from a die from a round bar to a sheet. Comparative Examples are plotted below a straight line indicated by a solid line in FIG. 3 (R < -0.1F + 0.5).

Compared to Comparative Examples, the porous PTFE membranes of Examples achieve a balance between water resistance and air permeability at a high level, although they are single-layer membranes, and are plotted above the straight line in FIG. 3 (R $\geq$ -0.1F + 0.5).

Among the porous PTFE membranes of Examples, those of Examples A8, A9, A11 and A12, each obtained by using a PTFE fine powder having a standard specific gravity of 2.16 or less, setting the stretch ratio in the stretching (wet stretching) in the step C to 5.0 or more, and setting the area stretch ratio in the stretchings (dry stretchings) in the step E to 50 or more and 140 or less, exhibited properties such as a Frazier air permeability F of 1 to 4 cm$^3$/sec/cm$^2$ and a water entry pressure R of 0.5 to 1 MPa and achieved a balance between water resistance and air permeability at a particularly high level.

In FIG. 3, the membranes of Examples obtained by setting the area stretch ratio in the dry stretchings to 16 (less than 50) are designated as Group A, those of Examples obtained by using a PTFE fine powder having a standard specific gravity of 2.17 (more than 2.16) are designated as Group B, and those of Examples obtained by setting the stretch ratio in the wet stretching to 3 (less than 5) are indicated by black circles. Compared with the membranes of Examples included in these groups A and B and indicated by black circles, the membranes of Examples A8, A9, A11, and A12 are found to achieve a good balance between water resistance and air permeability.

[Table 1]

| | PTFE (Standard specific gravity) | Thickness after rolling (mm) | Stretch ratio of transverse wet stretching | Stretch ratios of dry stretchings | Frazier air permeability (cm$^3$/sec/cm$^2$) | Water entry pressure (MPa) |
|---|---|---|---|---|---|---|
| Ex. A1 | CD123 (2.155) | 0.2 | 3 | 4×4 | 0.35 | 0.47 |
| Ex. A2 | CD 123 (2.155) | 0.2 | 5 | 4×4 | 0.47 | 0.61 |
| Ex. A3 | CD123 (2.155) | 0.2 | 7 | 4×4 | 0.59 | 0.62 |
| Ex. A4 | 601A (2.150) | 0.2 | 3 | 4×4 | 0.33 | 0.50 |
| Ex. A5 | 601A (2.150) | 0.2 | 5 | 4×4 | 0.38 | 0.55 |
| Ex. A6 | 601A (2.150) | 0.2 | 7 | 4×4 | 0.37 | 0.50 |
| Ex. A7 | CD123 (2.155) | 0.2 | 3 | 8×8 | 2.05 | 0.43 |

(continued)

| | | PTFE (Standard specific gravity) | Thickness afterrolling (mm) | Stretch ratio of transverse wet stretching | Stretch ratios of dry stretchings | Frazier air permeability $(cm^3/sec/cm^2)$ | Water entry pressure (MPa) |
|---|---|---|---|---|---|---|---|
| | Ex. A8 | CD123 (2.155) | 0.2 | 5 | 8×8 | 2.05 | 0.73 |
| | Ex. A9 | CD123 (2.155) | 0.2 | 7 | 8×8 | 2.94 | 0.62 |
| | Ex. A10 | 601A (2.150) | 0.2 | 3 | 8×8 | 0.71 | 0.51 |
| | Ex. A11 | 601A (2.150) | 0.2 | 5 | 8×8 | 1.39 | 0.63 |
| | Ex. A12 | 601A (2.150) | 0.2 | 7 | 8×8 | 1.47 | 0.57 |
| | Ex. A13 | 601A (2.150) | 0.4 | 3 | 8×8 | 0.41 | 0.74 |
| | Ex. A14 | F104 (2.17) | 0.2 | 3 | 8×8 | 3.49 | 0.26 |
| | Ex. A15 | F104 (2.17) | 0.2 | 5 | 8×8 | 2.94 | 0.38 |
| | Ex. A16 | F104 (2.17) | 0.2 | 7 | 8×8 | 2.69 | 0.35 |
| | Com. Ex. A1 | CD123 (2.155) | 0.2 | - | 4×4 | 0.63 | 0.15 |
| | Com. Ex. A2 | 601A (2.150) | 0.2 | - | 4×4 | 0.28 | 0.27 |
| | Com. Ex. A3 | CD123 (2.155) | 0.2 | - | 8×8 | 2.42 | 0.13 |
| | Com. Ex. A4 | 601A (2.150) | 0.4 | - | 8×8 | 0.50 | 0.37 |
| | Com. Ex. A5 | F104 (2.17) | 0.2 | - | 8×8 | 3.14 | 0.10 |
| | Com. Ex. A6 | CD123 (2.155) | 0.6 | - | 8×8 | 0.86 | 0.20 |
| | Com. Ex. A7 | 601A (2.150) | 0.8 | - | 8×8 | 0.25 | 0.44 |
| | Com. Ex. A8 | F104 (2.17) | 0.4 | - | 8×8 | 2.47 | 0.14 |

(continued)

|  | PTFE (Standard specific gravity) | Thickness afterrolling (mm) | Stretch ratio of transverse wet stretching | Stretch ratios of dry stretchings | Frazier air permeability (cm³/sec/cm²) | Water entry pressure (MPa) |
|---|---|---|---|---|---|---|
| Com. Ex. A9 | F104 (2.17) | 0.2*) | - | 4×4 | 2.20 | 0.10 |
| Com. Ex. A10 | F104 (2.17) | 0.2 | - | 4×4 | 0.95 | 0.08 |
| Com. Ex. A11 | CD-1 (2.20) | 0.2 | 3 | 8×8 | (Broken) | (Broken) |
| Com. Ex. A12 | CD-1 (2.20) | 0.2 | 5 | - | (Broken) | (Broken) |
| *) In Comparative Example A9, the PTFE mixture was extruded into a round bar form and then pressed to obtain a sheet with a thickness of 0.2 mm | | | | | | |

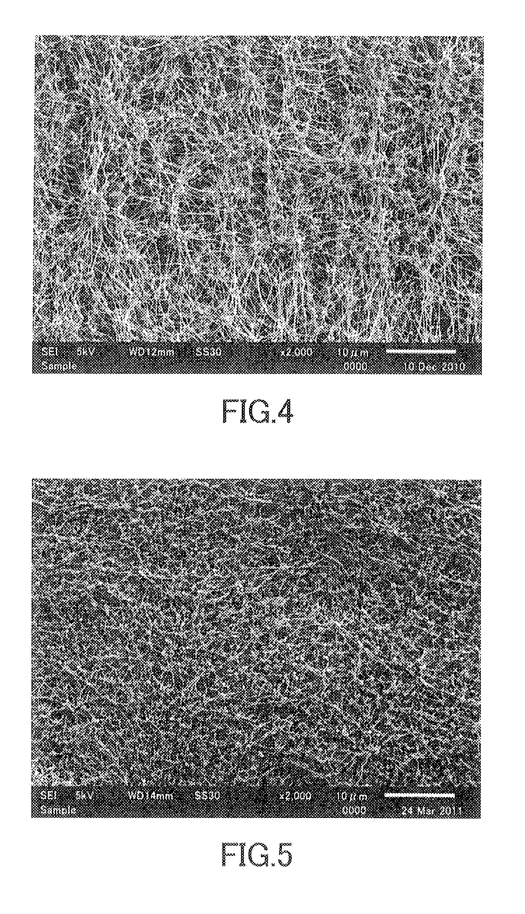

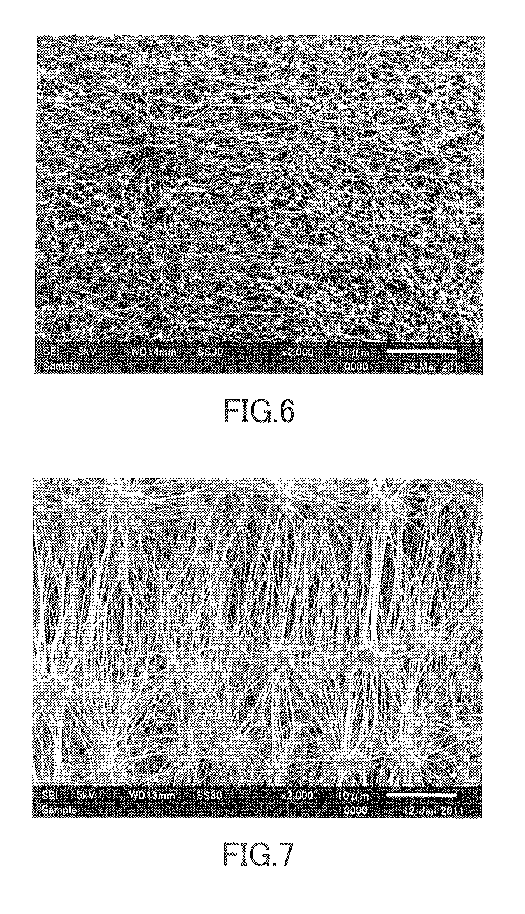

FIG. 4 to FIG. 6 show scanning electron microscope (SEM) micrographs of the porous PTFE membranes obtained in Examples A14 to A16. FIG. 7 shows a SEM micrograph of the porous PTFE membrane obtained in Comparative Example A5. In each of these SEM micrographs, the vertical direction is the longitudinal direction (MD direction). Compared with the membrane structure of the porous PTFE membrane obtained by the conventional production method (FIG. 7), the membrane structure of the porous PTFE membranes of FIG. 4 to FIG. 6 is characterized by smaller size fibrils, a larger number of "nodes", which are too small to identify as common nodes, and an increase in the number of fibrils extending in directions other than the stretching directions.

[Air Filter Medium]

The properties of porous PTFE membranes and air filter media were measured as follows.

[Pressure Loss]

Each of samples (porous PTFE membranes and filter media) was set in a circular holder having an effective area of 100 cm², and a pressure difference was applied between the inlet end and the outlet end of the holder so as to adjust the permeate flow rate through the sample to 5.3 cm/sec with a flowmeter. Then, the pressure loss was measured with a pressure gauge (manometer). The measurement was performed on 8 positions of each sample, and the average value was obtained as the pressure loss of the sample.

[Collection Efficiency]

The same device as used for the measurement of the pressure loss was used. Air containing polydisperse dioctyl phthalate (DOP) particles with a particle diameter of 0.10 $\mu$m to 0.20 $\mu$m at a concentration of about $10^7$ particles per liter were allowed to flow from the upstream side of each of the samples (porous PTFE membranes and air filter media) at a permeate flow rate of 5.3 cm/sec, and the concentration of the particles on the downstream side was measured with a particle counter. Then, the collection efficiency CE (%) was calculated based on the following Equation (B-6):

$$\text{CE (\%)} = \{1 - (\text{Downstream Concentration/Upstream Concentration})\} \times 100$$

$$(\text{B-6})$$

The particle diameters of the particles to be measured were in the range of 0.10 $\mu$m to 0.20 $\mu$m.

[Average Fiber Diameter]

A SEM micrograph (magnification of 10000) taken from directly above the surface of each porous PTFE membrane was prepared. This micrograph was enlarged and printed on an A4 size paper. A measuring line was drawn thereon in a direction corresponding to the longitudinal direction of the porous PTFE membrane, and the diameters of the fibers (fibrils) on the line were measured with calipers. The above measuring line was drawn along the center of the micrograph. When the diameters of overlapping fibers could not be measured on the measuring line, each of these fibers was traced to the measurable portion thereof on the micrograph to measure the diameter. The actual diameter was calculated from the measured value with reference to a reference line indicating the actual length on the SEM micrograph (shown in the lower right of each of FIG. 8 to FIG. 10) as a calibration line.

[Filling Factor]

Each porous PTFE membrane was stamped into a disk shape with a diameter of 47 mm as a specimen. The thickness of this specimen was measured from a cross-sectional SEM micrograph with a magnification of 1000. The weight of this specimen was measured, and the filling factor thereof was measured based on the following Equation (B-7):

$$\text{Filling Factor (\%)} = (W/SG)/(T \times S) \times 100 \qquad (B\text{-}7)$$

where W is the weight of the specimen (unit [g]), SG is the specific gravity of PTFE resin (unit [g/cm$^3$]), T is the thickness of the specimen (unit [cm]), and S is the surface area of the specimen (17.349 cm$^2$).

(Example B1)

100 parts by weight of PTFE fine powder ("Polyflon F-104", SSG of 2.171, manufactured by Daikin Industries, Ltd.) and 19 parts by weight of a liquid lubricant (dodecane) were mixed homogeneously to obtain a mixture. Next, this mixture was extruded into a sheet form using an extruder equipped with a fishtail die. The thickness of the PTFE sheet thus obtained by the extrusion was 1.5 mm, and the width thereof was 20 cm.

Furthermore, the PTFE sheet was rolled by being passed between a pair of metal pressure rolls. This rolling was performed while pulling the PTFE sheet in its longitudinal direction using a pull roll provided downstream of the pressure rolls, so as to keep the length of the PTFE sheet in the transverse direction unchanged before and after the rolling. The thickness of the PTFE sheet obtained by the rolling was 200 μm.

Subsequently, the rolled PTFE sheet containing the liquid lubricant was stretched in its transverse direction at a stretch ratio of 4 using a tenter. Then, the stretched PTFE sheet was maintained at 150°C to remove the liquid lubricant.

After the liquid lubricant was removed, the PTFE sheet was stretched in its longitudinal direction at a stretch ratio of 12 at a stretching temperature of 280°C by the roll stretching, and further stretched in its transverse direction at a stretch ratio of 30 at a stretching temperature of 110°C by the tenter stretching. Thus, an unsintered porous PTFE membrane was obtained. The area stretch ratio of the stretchings performed after the liquid lubricant was removed was 360.

Finally, the unsintered porous PTFE membrane was sintered in a hot air furnace at 400°C, and a long strip of porous PTFE membrane was obtained.

The above porous PTFE membrane was sandwiched between two sheets of core-sheath nonwoven fabric (with a mass per unit area of 30 g/m$^2$, a core component of PET, a sheath component of PE, an apparent density of 0.158 g/cm$^2$, an embossed area ratio of 15%, and a thickness of 0.19 mm), and passed between a pair of rolls heated to 180°C and thereby heat-laminated. Thus, a three-layer air filter medium (a very long filter medium with a width of 1200 mm and a length of 200 m) was obtained.

Next, the resulting air filter medium was pleated (186 pleats with a pleat height (or pleat width) of 50 mm). The pleated air filter medium was cut into a smaller medium, and a metallic support frame was bonded to the periphery of the medium with an adhesive. Thus, an air filter unit (dimensions of 610 mm × 610 mm × 65 mm thick) was obtained.

(Example B2)

A porous PTFE membrane was produced in the same manner as in Example B1, except that the PTFE sheet from which the liquid lubricant had been removed was stretched in its longitudinal direction at a stretch ratio of 14. An air filter unit was produced using this porous PTFE membrane in the same manner as in Example B1.

(Example B3)

A porous PTFE membrane was produced in the same manner as in Example B2, except that the PTFE sheet from which the liquid lubricant had been removed was stretched in its transverse direction at a stretching temperature of 60°C. An air filter unit was produced using this porous PTFE membrane in the same manner as in Example B1.

(Example B4)

A porous PTFE membrane was produced in the same manner as in Example B2, except that the PTFE sheet from which the liquid lubricant had been removed was stretched in its transverse direction at a stretching temperature of 160°C. An air filter unit was produced using this porous PTFE membrane in the same manner as in Example B1.

(Example B5)

A porous PTFE membrane was produced in the same manner as in Example B2, except that the PTFE sheet from which the liquid lubricant had been removed was stretched in its longitudinal direction at a stretch ratio of 27. An air filter unit was produced using this porous PTFE membrane in the same manner as in Example B1.

(Example B6)

A porous PTFE membrane was produced in the same manner as in Example B2, except that "Fluon CD-145" (SSG of 2.165) manufactured by Asahi Fluoropolymers Co., Ltd. was used as a PTFE fine powder. An air filter unit was produced using this porous PTFE membrane in the same manner as in Example B1.

(Example B7)

A porous PTFE membrane was produced in the same manner as in Example B2, except that "Fluon CD-123N" (SSG of 2.155) manufactured by Asahi Fluoropolymers Co., Ltd. was used as a PTFE fine powder. An air filter unit was produced using this porous PTFE membrane in the same manner as in Example B1.

(Example B8)

A porous PTFE membrane was produced in the same manner as in Example B7, except that the PTFE sheet from which the liquid lubricant had been removed was stretched in its longitudinal direction at a stretch ratio of 18. An air filter unit was produced using this porous PTFE membrane in the same manner as in Example B1.

(Comparative Example B1)

A porous PTFE membrane was produced in the same manner as in Example B2, except that the step of stretching the rolled PTFE sheet containing the liquid lubricant in its transverse direction was omitted and that the PTFE sheet from which the liquid lubricant had been removed was stretched in its longitudinal direction at a stretch ratio of 10. An air filter unit was produced using this porous PTFE membrane in the same manner as in Example B1.

(Comparative Example B2)

A porous PTFE membrane was produced in the same manner as in Comparative Example B1, except that the PTFE sheet from which the liquid lubricant had been removed was stretched in its longitudinal direction at a stretch ratio of 14. An air filter unit was produced using this porous PTFE membrane in the same manner as in Example B1.

(Comparative Example B3)

A porous PTFE membrane was produced in the same manner as in Comparative Example B1, except that the PTFE sheet from which the liquid lubricant had been removed was stretched in its longitudinal direction at a stretch ratio of 18.

An air filter unit was produced using this porous PTFE membrane in the same manner as in Example B1. An air filter medium used in Comparative Example B3 had a five-layer structure in which three nonwoven fabrics and two porous PTFE membranes were alternately laminated so that each of the porous PTFE membranes was sandwiched between the nonwoven fabrics.

(Comparative Example B4)

An attempt was made to produce a porous PTFE membrane in the same manner as in Example B2, except that "Fluon CD-1" (SSG of 2.20) manufactured by Asahi Fluoropolymers Co., Ltd. was used as a PTFE fine powder. However, the sheet was broken in the step of stretching it in its transverse direction after the liquid lubricant was removed, and a porous membrane could not be obtained. Therefore, the stretch ratio in the transverse direction was reduced to 10 and the stretch ratio in the longitudinal direction was increased to 20 to promote the formation of pores in the membrane. As a result, a porous PTFE membrane having the same thickness as that of Example B2 was obtained. In this comparative example, the sintering temperature in the sintering step (Step F) was 360°C. An air filter unit was produced using this porous PTFE membrane in the same manner as in Example B1.

Tables 2 and 3 show the measurement results of the properties of the porous PTFE membranes and the air filter units obtained in Examples and Comparative Examples. FIGs. 8 to 10 show the SEM micrographs of the porous PTFE membranes obtained in Example B2, Comparative Example B3, and Comparative Example B4, respectively.

As shown in Table 2, in each Example, a porous PTFE membrane having a PF value of 36 or more, a mass per unit area of 0.90 g/m$^2$ or less, and an average fiber diameter of 55 to 83 nm was obtained. In FIG. 8, it is observed that thin fibrils extend in random directions and nodes are finely divided in the porous PTFE membrane. The collection efficiency of the porous PTFE membrane obtained in Example B5 was low because the area stretch ratio was slightly too high.

Table 2

| | | Ex. B1 | Ex. B2 | Ex. B3 | Ex. B4 | Ex. B5 | Ex. B6 | Ex. B7 | Ex. B8 |
|---|---|---|---|---|---|---|---|---|---|
| PTFE (Standard specific gravity) | | F104 (2.17) | F104 (2.17) | F104 (2.17) | F104 (2.17) | F104 (2.17) | CD145 (2.165) | CD123 (2.155) | CD123 (2.155) |
| Stretch ratio of transverse wet stretching | | 4 | 4 | 4 | 4 | 4 | 4 | 4 | 4 |
| Longitudinal stretch conditions | Stretch ratio (i) | 12 | 14 | 14 | 14 | 27 | 14 | 14 | 18 |
| | Temperature (°C) | 280 | 280 | 280 | 280 | 280 | 280 | 280 | 280 |
| Transverse stretch conditions | Stretch ratio (ii) | 30 | 30 | 30 | 30 | 30 | 30 | 30 | 30 |
| | Temperature (°C) | 110 | 110 | 60 | 160 | 110 | 110 | 110 | 110 |
| Area stretch ratio (i) × (ii) | | 360 | 420 | 420 | 420 | 810 | 420 | 420 | 540 |
| Filter medium structure | | 3 layers | 3 layers | 3 layers | 3 layers | 3 layers | 3 layers | 3 layers | 3 layers |
| Porous PTFE membrane | Thickness (μm) (iii) | 10 | 11 | 10 | 12 | 8 | 10 | 10 | 9 |
| | Average fiber diameter (nm) | 65 | 58 | 66 | 78 | 79 | 77 | 69 | 72 |
| | Filling factor (%) | 3.9 | 3.2 | 3.8 | 2.9 | 2.5 | 3.7 | 3.5 | 3.2 |
| | Mass per unit area (g/m²) | 0.85 | 0.76 | 0.82 | 0.76 | 0.43 | 0.80 | 0.76 | 0.62 |
| | Pressure loss (Pa) (iv) | 208.9 | 180.2 | 217.8 | 142.1 | 52.0 | 153.0 | 191.0 | 147.0 |
| | Pressure loss per unit thickness (iv)/(iii) | 20.9 | 16.4 | 21.8 | 11.8 | 6.5 | 15.3 | 19.1 | 16.3 |
| | Collection efficiency (v)[1] | 9N0 | 8N5 | 9N0 | 5N8 | 1N8 | 6N5 | 7N8 | 5N8 |
| | Collection efficiency per unit thickness[2] | 87.4 | 82.4 | 87.4 | 67.9 | 43.1 | 76.6 | 83.0 | 76.7 |
| | PF value | 42.2 | 45.1 | 40.5 | 40.8 | 37.0 | 40.4 | 39.5 | 38.0 |
| Filter medium | Pressure loss | 234.0 | 194.6 | 246.1 | 160.6 | 58.8 | 168.3 | 210.1 | 161.7 |
| | Collection efficiency[1] | 9N0 | 8N5 | 9N0 | 5N8 | 2N1 | 6N5 | 7N8 | 5N8 |
| | PF value | 37.7 | 41.8 | 35.8 | 36.1 | 32.7 | 36.7 | 35.9 | 34.5 |

1) Collection efficiency (%) is expressed in the form of "(the number of consecutive 9s) N (figure following the last 9)" (for example, "9N0" indicates 99.99999990).

2) Calculated using (iii) and (v) by Equation (B-4).

EP 2 730 607 B1

Table 3

| | Com. Ex. B1 | Com. Ex. B2 | Com. Ex. B3 | Com. Ex. B4 |
|---|---|---|---|---|
| PTFE (Standard specific gravity) | F104 (2.17) | F104 (2.17) | F104 (2.17) | CD1 (2.20) |
| Stretch ratio of transverse wet stretching | - | - | - | 4 |
| Longitudinal stretch conditions — Stretch ratio (i) | 10 | 14 | 18 | 20 |
| Longitudinal stretch conditions — Temperature (°C) | 280 | 280 | 280 | 280 |
| Transverse stretch conditions — Stretch ratio (ii) | 30 | 30 | 30 | 10 |
| Transverse stretch conditions — Temperature (°C) | 110 | 110 | 110 | 110 |
| Area stretch ratio (i) × (ii) | 300 | 420 | 540 | 200 |
| Filter medium structure | 3 layers | 3 layers | 5 layers | 3 layers |
| Porous PTFE membrane — Thickness (μm) (iii) | 10 | 10 | 10 | 11 |
| Porous PTFE membrane — Average fiber diameter (nm) | 100 | 105 | 120 | 685 |
| Porous PTFE membrane — Filling factor (%) | 4.4 | 4.3 | 4.0 | 4.2 |
| Porous PTFE membrane — Mass per unit area (g/m$^2$) | 0.95 | 0.93 | 0.87 | 1.00 |
| Porous PTFE membrane — Pressure loss (Pa) (iv) | 251.0 | 160.6 | 95.5 | 12.5 |
| Porous PTFE membrane — Pressure loss per unit thickness (iv)/(iii) | 25.1 | 16.1 | 9.6 | 1.1 |
| Porous PTFE membrane — Collection efficiency (v)[1] | 6N0 | 5N7 | 3N4 | 0N5 (52%) |
| Porous PTFE membrane — Collection efficiency per unit thickness[2] | 74.9 | 72.0 | 52.8 | 6.5 |
| Porous PTFE membrane — PF value | 23.4 | 33.7 | 33.4 | 25.1 |
| Filter medium — Pressure loss | 276.1 | 170.2 | 214.0 | 14.3 |
| Filter medium — Collection efficiency[1] | 6N0 | 5N7 | 6N7 | 0N5 (52%) |
| Filter medium — PF value | 21.3 | 31.8 | 29.9 | 21.8 |

1) and 2) See the footnotes of Table 2

In each of Comparative Examples B1 to B3, an increase in the PF value was limited because the transverse wet stretching was not performed. In these comparative examples, porous PTFE membranes including slightly thicker fibrils, as shown in FIG. 9, were obtained. The PF value of the porous PTFE membrane obtained in Comparative Example B4 was very low. This porous membrane had a structure, as shown in FIG. 10, in which nodes were not finely divided and most fibrils extended in the two stretching directions.

The porous PTFE membranes obtained in Examples B2 and B6 to B8 each had a collection efficiency per 1 μm thickness of 76% or more and less than 85% and a pressure loss per 1 μm thickness of 13 Pa or more and 19.5 Pa or less. The porous PTFE membranes obtained in Examples B1 and B3 each had a collection efficiency per 1 μm thickness of 85% or more and 90% or less and a pressure loss per 1 μm thickness of 20 Pa or more and 25 Pa or less. Porous PTFE membranes having such desirable values as mentioned above in the properties per unit thickness could be produced because of the above-described improvements in the production method.

In addition, the air filter media obtained in Examples B1 to B3 each exhibited the properties of a collection efficiency of 8N or more, a pressure loss of 250 Pa or less, and a PF value of 35 or more and 45 or less (a PF value of 37 or more in Examples B1 and B2), although they are filter media having a simple three-layer structure including one single-layer porous PTFE membrane and two nonwoven fabrics placed on both surfaces of the porous membrane.

The air filter media of Examples B1 to B3 each have a very high collection efficiency as well as a pressure loss at a practically acceptable level, and are particularly suitable for use in the field of filtering that focuses on the collection of particles. A conventionally known porous PTFE membrane having a high PF value is obtained by focusing on the increase in the distance between fibrils as the first priority to increase the PF value. Therefore, the essential feature of a filter medium using this membrane lies not in its high collection efficiency but in its low pressure loss (Patent Literature 3). In contrast, the PF values of the air filter media of the present invention, in particular the air filter media of Examples B1 to B3, are increased not by an improvement in the pressure loss but by a significant improvement in the collection efficiency. Therefore, they exhibit new features that have not been observed in conventional filter media.

INDUSTRIAL APPLICABILITY

Porous PTFE membranes are often required to achieve both resistance and permeability. In other words, they are required to allow selective permeation of target objects and energy. In view of this fact, the membrane structure observed characteristically in the porous PTFE membrane of the present invention is considered essentially suitable for improving the level of the selective permeation. The porous PTFE membrane of the present invention is useful as a means of improving the level of the selective permeation when used in a waterproof air-permeable member, an air filter medium, or the like.

**Claims**

1. A method for producing a porous polytetrafluoroethylene membrane, comprising:

   a step A of extruding a mixture containing a polytetrafluoroethylene fine powder having a standard specific gravity of 2.19 or less determined according to JIS K6892 and a liquid lubricant into a sheet using a flat die so as to obtain a polytetrafluoroethylene sheet;
   a step B of rolling the polytetrafluoroethylene sheet by passing the sheet between a pair of rolls in a longitudinal direction of the sheet that is a direction of the extrusion in the step A;
   a step C of stretching the polytetrafluoroethylene sheet in a transverse direction perpendicular to the longitudinal direction of the sheet;
   a step D of removing the liquid lubricant from the polytetrafluoroethylene sheet that has been rolled in the step B and stretched in the step C; and
   a step E of stretching the polytetrafluoroethylene sheet, from which the liquid lubricant has been removed in the step D, both in the longitudinal direction of the sheet and in the transverse direction of the sheet so as to obtain a porous polytetrafluoroethylene membrane.

2. The method for producing a porous polytetrafluoroethylene membrane according to claim 1, further comprising a step F of sintering the porous polytetrafluoroethylene membrane at a temperature equal to or higher than a melting point of polytetrafluoroethylene.

3. The method for producing a porous polytetrafluoroethylene membrane according to claim 1, wherein in the step B, the polytetrafluoroethylene sheet is rolled, with a length of the polytetrafluoroethylene sheet in the transverse direction being maintained unchanged.

4. The method for producing a porous polytetrafluoroethylene membrane according to claim 1, wherein a mixing ratio of the polytetrafluoroethylene fine powder and the liquid lubricant in the mixture is adjusted so that the mixture contains 5 to 50 parts by mass of the liquid lubricant per 100 parts by mass of the polytetrafluoroethylene fine powder.

5. The method for producing a porous polytetrafluoroethylene membrane according to claim 1, wherein the flat die is a fishtail die.

6. The method for producing a porous polytetrafluoroethylene membrane according to claim 1, wherein in the step E, a product of a stretch ratio in the longitudinal direction and a stretch ratio in the transverse direction is 4 or more and less than 150.

7. The method for producing a porous polytetrafluoroethylene membrane according to claim 1, wherein in the step E, a product of a stretch ratio in the longitudinal direction and a stretch ratio in the transverse direction is 150 or more and 700 or less.

8. The method for producing a porous polytetrafluoroethylene membrane according to claim 7, wherein in the step E, a product of a stretch ratio in the longitudinal direction and a stretch ratio in the transverse direction is 300 or more and 700 or less.

9. A method for producing a waterproof air-permeable member, comprising a step of connecting a fixing member to a connecting region of a porous polytetrafluoroethylene membrane, the connecting region surrounding an air-permeable region of the porous polytetrafluoroethylene membrane, wherein
the method further comprises a step of preparing the porous polytetrafluoroethylene membrane, the step being the method for producing a porous polytetrafluoroethylene membrane according to claim 1.

10. A method for producing an air filter medium, comprising a step of bonding a porous polytetrafluoroethylene membrane and an air-permeable support member, wherein
the method further comprises a step of preparing the porous polytetrafluoroethylene membrane, the step being the method for producing a porous polytetrafluoroethylene membrane according to claim 1.

**Patentansprüche**

1. Verfahren zum Herstellen einer porösen Polytetrafluorethylen-Membran, umfassend:

einen Schritt A des Extrudierens einer Mischung, die ein Polytetrafluorethylen-Feinpulver enthält, das eine gemäß JIS K6892 bestimmte relative Standarddichte von 2,19 oder weniger aufweist, und eines flüssigen Schmiermittels in einen Bogen unter Verwendung einer Flachdüse, um einen Polytetrafluorethylen-Bogen zu erhalten,
einen Schritt B des Walzens des Polytetrafluorethylen-Bogens mittels Durchführen des Bogens zwischen einem Paar von Walzen in einer Längsrichtung des Bogens, die eine Richtung der Extrusion in Schritt A ist,
einen Schritt C des Streckens des Polytetrafluorethylen-Bogens in einer Querrichtung senkrecht zur Längsrichtung des Bogens,
einen Schritt D des Entfernens des flüssigen Schmiermittels aus dem Polytetrafluorethylen-Bogen, der in dem Schritt B gewalzt und in dem Schritt C gestreckt wurde, und
einen Schritt E des Streckens des Polytetrafluorethylen-Bogens, aus dem das flüssige Schmiermittel in dem Schritt D entfernt worden ist, sowohl in der Längsrichtung des Bogens als auch in der Querrichtung des Bogens, um eine poröse Polytetrafluorethylen-Membran zu erhalten.

2. Verfahren zum Herstellen einer porösen Polytetrafluorethylen-Membran nach Anspruch 1, ferner umfassend einen Schritt F des Sinterns der porösen Polytetrafluorethylen-Membran bei einer Temperatur, die gleich einem oder höher als ein Schmelzpunkt von Polytetrafluorethylen ist.

3. Verfahren zum Herstellen einer porösen Polytetrafluorethylen-Membran nach Anspruch 1, wobei der Polytetrafluorethylen-Bogen in dem Schritt B gewalzt wird, wobei eine Länge des Polytetrafluorethylen-Bogens in der Querrichtung unverändert beibehalten wird.

4. Verfahren zum Herstellen einer porösen Polytetrafluorethylen-Membran nach Anspruch 1, wobei ein Mischungsverhältnis des Polytetrafluorethylen-Feinpulvers und des flüssigen Schmiermittels in der Mischung so eingestellt wird, dass die Mischung 5 bis 50 Massenanteile des flüssigen Schmiermittels pro 100 Massenanteile des Polytetrafluorethylen-Feinpulvers enthält.

5. Verfahren zum Herstellen einer porösen Polytetrafluorethylen-Membran nach Anspruch 1, wobei die Flachdüse eine Fischschwanzdüse ist.

6. Verfahren zum Herstellen einer porösen Polytetrafluorethylen-Membran nach Anspruch 1, wobei in Schritt E ein Produkt eines Streckungsverhältnisses in der Längsrichtung und eines Streckungsverhältnisses in der Querrichtung 4 oder mehr und weniger als 150 beträgt.

7. Verfahren zum Herstellen einer porösen Polytetrafluorethylen-Membran nach Anspruch 1, wobei in Schritt E ein Produkt eines Streckungsverhältnisses in der Längsrichtung und eines Streckungsverhältnisses in der Querrichtung 150 oder mehr und 700 oder weniger beträgt.

8. Verfahren zum Herstellen einer porösen Polytetrafluorethylen-Membran nach Anspruch 7, wobei in Schritt E ein Produkt eines Streckungsverhältnisses in der Längsrichtung und eines Streckungsverhältnisses in der Querrichtung 300 oder mehr und 700 oder weniger beträgt.

9. Verfahren zum Herstellen eines wasserdichten luftdurchlässigen Elementes, umfassend einen Schritt des Verbindens eines Befestigungselementes mit einem Verbindungsbereich einer porösen Polytetrafluorethylen-Membran, wobei der Verbindungsbereich einen luftdurchlässigen Bereich der porösen Polytetrafluorethylen-Membran umgibt, wobei

das Verfahren ferner einen Schritt des Herstellens der porösen Polytetrafluorethylen-Membran umfasst, wobei der Schritt das Verfahren zum Herstellen einer porösen Polytetrafluorethylen-Membran nach Anspruch 1 ist.

10. Verfahren zum Herstellen eines Luftfiltermediums, umfassend einen Schritt des Bondens einer porösen Polytetrafluorethylen-Membran und eines luftdurchlässigen Trägerelementes, wobei

das Verfahren ferner einen Schritt des Herstellens der porösen Polytetrafluorethylen-Membran umfasst, wobei der Schritt das Verfahren zum Herstellen einer porösen Polytetrafluorethylen-Membran nach Anspruch 1 ist.

**Revendications**

1. Procédé de production d'une membrane de polytétrafluoro-éthylène poreuse, comprenant :

une étape A d'extrusion d'un mélange contenant une fine poudre de polytétrafluoroéthylène présentant une densité spécifique standard de 2,19 ou inférieure déterminée selon JIS K6892 et un lubrifiant liquide en une feuille en utilisant une filière plate afin d'obtenir une feuille de polytetrafluoroéthylène ;

une étape B de laminage de la feuille de polytétrafluoroéthylène en faisant passer la feuille entre une paire de rouleaux dans une direction longitudinale de la feuille qui est une direction de l'extrusion dans l'étape A ;

une étape C d'étirage de la feuille de polytétrafluoroéthylène dans une direction transversale perpendiculaire à la direction longitudinale de la feuille ;

une étape D d'élimination du lubrifiant liquide de la feuille de polytétrafluoroéthylène qui a été laminée dans l'étape B et étirée dans l'étape C ; et

une étape E d'étirage de la feuille de polytétrafluoroéthylène, à partir de laquelle le lubrifiant liquide a été éliminé dans l'étape D, à la fois dans la direction longitudinale de la feuille et dans la direction transversale de la feuille afin d'obtenir une membrane de polytétrafluoroéthylène poreuse.

2. Procédé de production d'une membrane de polytétrafluoro-éthylène poreuse selon la revendication 1, comprenant de plus une étape F de frittage de la membrane de polytétrafluoroéthylène poreuse à une température supérieure ou égale à un point de fusion du polytétra-fluoroéthylène.

3. Procédé de production d'une membrane de polytétrafluoro-éthylène poreuse selon la revendication 1, dans lequel dans l'étape B, la feuille de polytétrafluoroéthylène est laminée, avec une longueur de la feuille de polytétrafluoro-éthylène dans la direction transversale étant maintenue inchangée.

4. Procédé de production d'une membrane de polytétrafluoro-éthylène poreuse selon la revendication 1, dans lequel un rapport de mélange de la fine poudre de polytétrafluoroéthylène et du lubrifiant liquide dans le mélange est ajusté de sorte que le mélange contient de 5 à 50 parties en masse du lubrifiant liquide pour 100 parties en masse de la fine poudre de polytétrafluoroéthylène.

5. Procédé de production d'une membrane de polytétrafluoro-éthylène poreuse selon la revendication 1, dans lequel la filière plate est une filière en queue de poisson.

6. Procédé de production d'une membrane de polytétrafluoro-éthylène poreuse selon la revendication 1, dans lequel dans l'étape E, un produit d'un rapport d'étirage dans la direction longitudinale et d'un rapport d'étirage dans la direction transversale est de 4 ou supérieur et inférieur à 150.

7. Procédé de production d'une membrane de polytétrafluoro-éthylène poreuse selon la revendication 1, dans lequel dans l'étape E, un produit d'un rapport d'étirage dans la direction longitudinale et d'un rapport d'étirage dans la direction transversale est de 150 ou supérieur et de 700 ou inférieur.

8. Procédé de production d'une membrane de polytétrafluoro-éthylène poreuse selon la revendication 7, dans lequel dans l'étape E, un produit d'un rapport d'étirage dans la direction longitudinale et d'un rapport d'étirage dans la direction transversale est de 300 ou supérieur et de 700 ou inférieur.

9. Procédé de production d'un élément perméable à l'air imperméable à l'eau, comprenant une étape de connexion d'un élément de fixation à une région de connexion d'une membrane de polytétrafluoro-éthylène poreuse, la région de connexion entourant une région perméable à l'air de la membrane de polytétrafluoroéthylène poreuse, dans lequel le procédé comprend de plus une étape de préparation de la membrane de polytétrafluoroéthylène poreuse, l'étape étant le procédé de production d'une membrane de polytétrafluoroéthylène poreuse selon la revendication 1.

10. Procédé de production d'un milieu de filtre d'air, comprenant une étape de liaison d'une membrane de polytétrafluoroéthylène poreuse et d'un élément de support perméable à l'air, dans lequel le procédé comprend de plus une étape de préparation de la membrane de polytétra-fluoroéthylène poreuse, l'étape étant le procédé pour la production d'une membrane poreuse de polytétrafluoroéthylène selon la revendication 1.

FIG.1

FIG.2

FIG.3

FIG.4

FIG.5

FIG.6

FIG.7

FIG.8

FIG.9

FIG.10

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0808648 A
- JP 2010110914 A
- JP 2001170461 A
- JP 2002301343 A